# FASCICULE DE BREVET EUROPEEN

(11) **EP 2 795 081 B1**
(45) Date de publication et mention de la délivrance du brevet: **13.09.2017**
(21) Numéro de dépôt: 12816707.9
(22) Date de dépôt: 11.12.2012
(51) Int. Cl.: F02M 26/26, F02M 26/71

(54) **DOSEUR DEUX VOIES AVEC UN MOTEUR UNIQUE AGISSANT DANS UN SEUL SENS**
ZWEIWEGEVENTIL NACH EINER EINZIGEN RICHTUNG DREHENDEN MOTOR BETÄTIGT
TWO WAY VALVE ACTUATED BY A SINGLE DIRECTION ROTATING MOTOR

(30) Priorité: 21.12.2011 FR 1162180
(43) Date de publication de la demande: 29.10.2014
(73) Titulaire: Valeo Systèmes de Contrôle Moteur, 95800 Cergy (FR)
(72) Inventeur: LALLEMANT, Mathieu, F-78600 Maisons-Laffitte (FR); GIRARDON, Franck, F-78700 Conflans Sainte Honorine (FR); LEBRASSEUR, Patrick, F-60240 Montagny En Vexin (FR)
(74) Mandataire: Garcia, Christine
(86) Numéro de dépôt international: PCT/FR2012/052879
(87) Numéro de publication internationale: WO 2013/093290

(56) Documents cités:
- DE-C1- 4 401 559
- FR-A1- 2 900 455
- FR-A1- 2 926 126

## Description

Le domaine de la présente invention est celui de l'automobile et, plus particulièrement, celui des équipements pour l'alimentation du moteur d'un véhicule.

Un moteur thermique de véhicule automobile comporte une chambre de combustion, généralement formée par une pluralité de cylindres, dans laquelle un mélange de carburant et d'air est brûlé pour générer le travail du moteur. Il est connu des architectures dans lesquelles le débit de fluide d'admission, comprenant l'air nécessaire au fonctionnement du moteur, est divisé entre deux canalisations. L'une des canalisations porte un dispositif de refroidissement de ce fluide, alors que l'autre n'en comporte pas. Ces deux canalisations se rejoignent ensuite à l'entrée du moteur. Le dispositif de dosage peut ainsi faire varier la température du fluide d'admission avant son introduction dans les cylindres selon que l'on envoie plus de fluide par la voie qui traverse le refroidisseur, dite voie refroidie, ou par la voie qui le contourne, dite voie by-pass ou voie non refroidie. Le dispositif de dosage permet de la sorte de gérer à la fois la quantité du fluide admis dans les cylindres et sa température.

Dans l'art antérieur ce dispositif de dosage a tout d'abord été réalisé sous la forme de deux doseurs simples, qui reçoivent des consignes du calculateur de régulation du moteur et qui ouvrent plus ou moins leur volet à l'aide d'un actionneur asservi en position. Ils ont également pour fonction d'assurer, sur une commande spécifique, l'arrêt du moteur, par positionnement de leurs volets en position plein fermée, ce qui étouffe le moteur. Dans leur position de repos, c'est-à-dire celle prise par les volets en cas de panne de l'asservissement ou d'absence de réception d'une consigne, ceux-ci se placent automatiquement, sous l'effet d'un ressort de rappel, en position ouverte. Ces dispositifs ont pour inconvénients de mettre en oeuvre deux composants, de nécessiter deux systèmes d'asservissements avec les connectiques associées, ce qui augmente sensiblement leur coût et de complexifier le système de commande du dosage pour garantir la simultanéité des deux doseurs.

Une première amélioration a été apportée avec la création de doseurs doubles qui regroupent dans un même composant les deux volets et la commande de leur positionnement. Un tel dispositif est décrit dans la demande de brevet WO 2007125205 ou FR 2 900 455 de la demanderesse, qui montre un doseur double dont le mécanisme est actionné par un moteur d'actionnement commun. Dans cette demande un des volets effectue, en fonctionnement normal, un dosage du fluide d'admission, le second volet restant fermé ; dans un mode secondaire le premier volet est fermé alors que le second volet reste plein ouvert.

La cinématique associée à ce doseur double a cependant pour inconvénient qu'elle nécessite la mise en rotation du moteur d'actionnement dans un sens et dans l'autre selon la configuration de dosage désirée. Il s'ensuit une complexité technologique accrue.

La présente invention a pour but de remédier à ces inconvénients en proposant un doseur double présentant une cinématique qui permette de suivre la loi de déplacement désirée, tel qu'un dosage proportionnel sur les deux voies et/ou un dosage sur une seule voie, et cela en n'actionnant le moteur d'actionnement que dans un seul sens.

A cet effet, l'invention a pour objet un doseur double pour le dosage du fluide d'admission d'un moteur à combustion interne et la régulation de sa température, comportant un corps dans lequel sont agencées une première et une seconde voies de circulation dudit fluide d'admission, dans lesquelles sont positionnés des premier et second volets d'obturation pour doser le débit traversant lesdites voies, ledit doseur comportant en outre un moteur d'actionnement desdits volets et une cinématique actionnant simultanément le premier volet et le second volet selon une loi de déplacement en réponse à un actionnement dudit moteur, ladite cinématique comportant une position de repos dans laquelle se positionnent lesdits volets en absence d'effort fourni par ledit moteur d'actionnement. Selon l'invention, ladite cinématique est configurée pour que lesdits volets puissent suivre l'intégralité de ladite loi de déplacement sous l'action du moteur à partir de ladite position de repos et sans repasser par celle-ci.

Le moteur d'actionnement, qui est avantageusement un moteur électrique, peut de la sorte être actionné dans une seule direction ce qui permet de réaliser sa commande de façon extrêmement simple. En effet, on peut décrire l'intégralité de la loi de déplacement des volets sans inversion du sens de la polarité appliquée au moteur, contrairement par exemple à ce qui est décrit dans la demande FR 2 900 455.

Lesdits volets sont, par exemple, mobiles en rotation. L'effort fourni par le moteur pour les entraîner par l'intermédiaire de ladite cinématique peut alors être un couple. L'axe de rotation du premier volet peut être parallèle à l'axe de rotation du deuxième volet.

La cinématique peut permettre que :
- sur une phase de la loi de déplacement, le déplacement du moteur soit simultanément transmis au premier et au deuxième volet, et
- sur une autre phase de la loi de déplacement, le déplacement du moteur ne soit transmis qu'à un seul volet, l'autre volet restant immobile.

Lorsque le déplacement du moteur est simultanément transmis au premier et au deuxième volet, aucun déphasage n'existe par exemple entre le déplacement du premier volet et le déplacement du deuxième volet, contrairement à ce qui est enseigné par la demande FR 2 926 126.

Avantageusement la cinématique est conformée pour assurer, en réponse à une première commande du moteur d'actionnement, un dosage proportionnel sur les deux voies de sortie par rotation simultanée des deux volets, une augmentation du débit sur une des voies de sortie étant associée à une diminution du débit sur l'autre, pendant une première phase de ladite loi de déplacement.

Dans un mode particulier de réalisation la cinématique est conformée pour assurer un débit total constant lors dudit dosage proportionnel.

Préférentiellement la cinématique est conformée pour assurer, en réponse à une seconde commande du moteur d'actionnement consécutive à une fermeture dudit premier volet et une ouverture dudit second volet du fait de ladite première commande, le dosage du débit traversant la seconde voie de sortie par une rotation du second volet, le premier volet restant fermé, pendant une seconde phase de ladite loi de déplacement.

De façon plus préférentielle la cinématique est conformée pour amener le second volet, en réponse à la seconde commande, dans une position plein fermée correspondant à un retournement dudit volet par rapport à sa position fermée dans la position de repos.

Comme expliqué ci-dessus, la première commande du moteur d'actionnement peut correspondre à une mise en rotation de ce dernier selon un premier sens de rotation et sur une première valeur angulaire, et la deuxième commande du moteur d'actionnement peut correspondre à une mise en rotation du moteur d'actionnement selon le premier sens de rotation et sur une deuxième valeur angulaire. La rotation du moteur d'actionnement selon la deuxième commande peut ainsi s'effectuer dans le même sens que celle selon la première commande.

Avantageusement la cinématique est configurée pour positionner les volets en opposition à l'action de deux ressorts de rappel, un premier ressort restant précontraint pendant la première phase de la loi de déplacement pour transmettre l'effort du moteur à un premier desdits volets et subissant une contrainte, sous l'action dudit moteur, pendant la seconde phase de ladite loi de déplacement, le second ressort subissant une contrainte, sous l'action dudit moteur, au moins pendant la première phase, notamment pendant les deux phases, de ladite loi de déplacement.

De façon plus avantageuse le moteur d'actionnement entraîne une première roue dentée porteuse d'un doigt d'entraînement conformé pour entraîner en rotation le premier volet, par l'intermédiaire dudit premier ressort de rappel.

De façon encore plus avantageuse une des extrémités dudit premier ressort de rappel est fixée sur une première platine liée rigidement à l'axe du volet correspondant, l'autre extrémité étant fixée sur ladite première roue dentée.

De façon préférentielle le moteur d'actionnement entraîne par l'intermédiaire d'un pignon d'entraînement deux roues dentées engrenant l'une sur l'autre, ladite première platine comportant une plage morte dans sa coopération avec le doigt d'entraînement et ladite plage morte correspondant à l'actionnement du seul second volet par le moteur d'actionnement, le premier volet restant immobile.

L'invention porte également sur un module d'admission d'air pour moteur à combustion interne comportant un doseur double tel que décrit ci-dessus.

La première voie de circulation du doseur est par exemple reliée à un refroidisseur du module d'admission alors que la seconde voie de circulation court-circuite ce refroidisseur, notamment en vue de rejoindre directement les pipes d'admission. Dans la position de repos, le premier volet peut être ouvert, c'est-à-dire permettre la circulation du fluide d'admission vers le refroidisseur tandis que le deuxième volet peut être fermé, empêchant le court-circuitage par le fluide d'admission du refroidisseur.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue schématique d'une architecture haute pression d'alimentation d'un moteur de véhicule turbocompressé,
- la figure 2 est une vue schématique d'une architecture basse pression d'alimentation d'un moteur turbocompressé,
- la figure 3 est une vue de face d'un doseur double, selon l'invention, pour le circuit d'alimentation d'un moteur turbocompressé,
- la figure 4 est une vue éclatée, en perspective, d'un doseur selon l'invention et de son dispositif de commande,
- la figure 5 est une représentation d'une loi de déplacement des volets donnant leur degré d'ouverture sur chacune des voies, en fonction de la position angulaire de la roue dentée d'entraînement, lors de son actionnement par le moteur unique du doseur double,
- la figure 6 est une représentation de l'évolution de la section efficace du doseur double pour le passage du fluide qui le traverse, et de la température de ce fluide, selon la position donnée aux volets par le moteur d'actionnement du doseur double,
- les figures 7 et 8 sont des vues de dessus du doseur double de la figure 4 montrant respectivement les volets et leurs cinématiques de commande, dans la position de repos, qui correspond également à la position initiale de la course du moteur d'actionnement,
- les figures 9 et 10 sont des vues de dessus du doseur double de la figure 4 montrant respectivement les volets et leurs cinématiques de commande, dans la position médiane de la course du moteur d'actionnement,
- les figures 11 et 12 sont des vues de dessus du doseur double de la figure 4 montrant respectivement les volets et leurs cinématiques de commande, dans la position finale de la course du moteur d'actionnement,
- les figures 13 à 16 sont des vues schématiques, selon une représentation linéaire, de la position relative des éléments de la cinématique du doseur double, respectivement, dans les positions initiale, médiane et finale de la course du moteur d'actionnement.

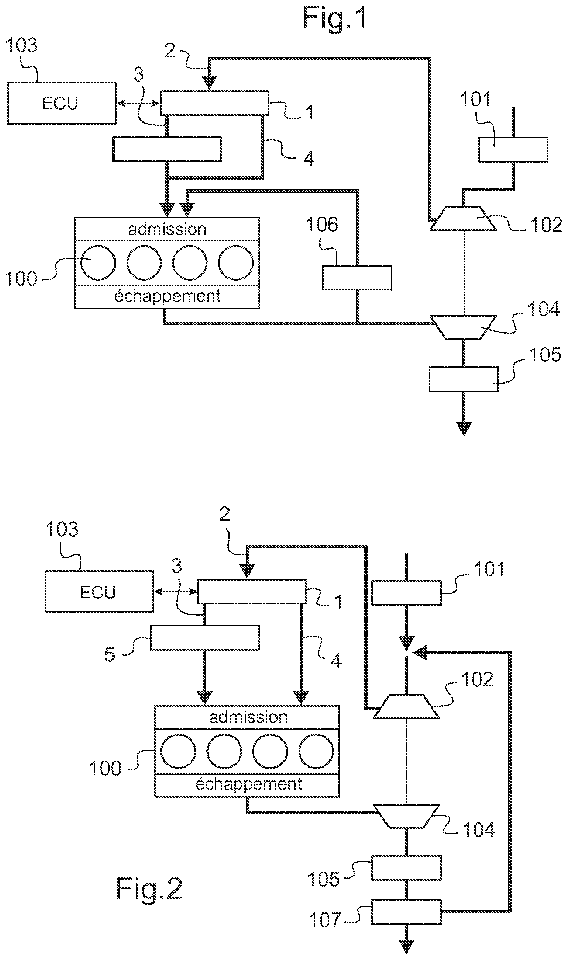

En se référant à la figure 1, on voit le circuit d'alimentation en air des cylindres 100 d'un moteur à combustion interne turbocompressé pour un véhicule automobile. L'air, prélevé à l'extérieur, passe dans un filtre à air 101 puis est comprimé par le compresseur 102 du turbocompresseur qui l'envoie dans le doseur double, objet de l'invention. Le corps 1 de ce doseur double possède une voie d'entrée 2 par laquelle passe l'air en provenance du compresseur et deux voies de sortie 3 et 4. Il reçoit des ordres pour le dosage de l'air entre ces deux voies, d'un calculateur 103, dit ECU pour Electronic control unit ou unité de contrôle électronique. Ces ordres sont exécutés sous la forme d'un déplacement des volets qui ferment plus ou moins les voies 3 et 4 sous l'action d'un moteur électrique d'actionnement et d'une cinématique adaptée, qui sont intégrés dans le corps du doseur double. Sur l'une des voies, dite voie refroidie 3, est monté un échangeur thermique ou refroidisseur 5, alors que l'autre voie, dite voie by-pass ou voie non refroidie 4, est reliée directement aux pipes d'admission du moteur du véhicule. En faisant varier la répartition de l'air entre les deux voies, qui se rejoignent en amont des pipes d'admission, il est ainsi possible de réguler la température à l'admission du moteur.

En sortie des cylindres du moteur les gaz brûlés sont dirigés vers le circuit d'échappement et passent dans la turbine 104 du turbocompresseur qui prélève une partie de leur énergie résiduelle pour actionner le compresseur correspondant 102. Ces gaz d'échappement traversent ensuite classiquement un filtre à particules et/ou un catalyseur 105 avant d'être éjectés du véhicule.

Dans le cas d'une architecture haute pression, telle qu'elle est représentée sur la figure 1, une partie des gaz d'échappement est recyclée, via une vanne haute pression 106 située en amont de la turbine 104, dans le circuit d'admission en aval de la jonction des deux voies de sortie 3 et 4.

Dans le cas d'un architecture basse pression, telle qu'elle est représentée sur la figure 2, on retrouve les mêmes éléments que dans une architecture haute pression, à ceci près que la partie recyclée des gaz d'échappement est prélevée en aval de la turbine 104 et réinjectée, via une vanne basse pression 107, en amont du compresseur 102 du turbocompresseur. Le fluide qui circule dans le circuit d'admission n'est alors pas uniquement de l'air mais un mélange d'air et de gaz d'échappement. Le fonctionnement du doseur double reste cependant le même dans les deux architectures.

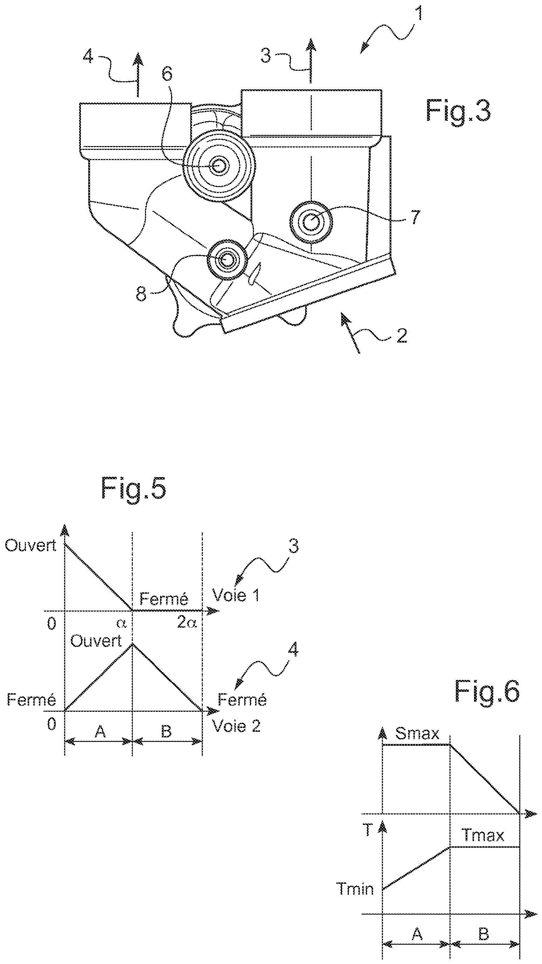

En se référant maintenant à la figure 3 on voit le corps 1 d'un doseur double, avec la voie d'entrée 2 et les deux voies de sortie 3 et 4. La première voie de sortie 3 a vocation à être raccordée à un refroidisseur 5 alors que la seconde voie 4 a vocation à court-circuiter ce refroidisseur pour rejoindre directement les pipes d'admission. Chacune des deux voies 3 et 4 est dosée par un volet, ici mobile autour d'un axe qui est monté sur un support d'axe, 7 pour la première voie et 8 pour la seconde. Le dosage sur chaque voie s'effectue par la rotation du volet, qui obstrue plus ou moins le débit d'air ou de gaz qui traverse la voie correspondante selon une loi de déplacement des volets. Le corps 1 pourra également comporter un support 6 pour le moteur électrique d'actionnement des deux volets, auquel ceux-ci sont reliés par une cinématique appropriée. Le moteur électrique d'actionnement 9 reçoit des consignes de l'ECU 103 pour placer les volets dans la position désirée, selon ladite loi de déplacement des volets.

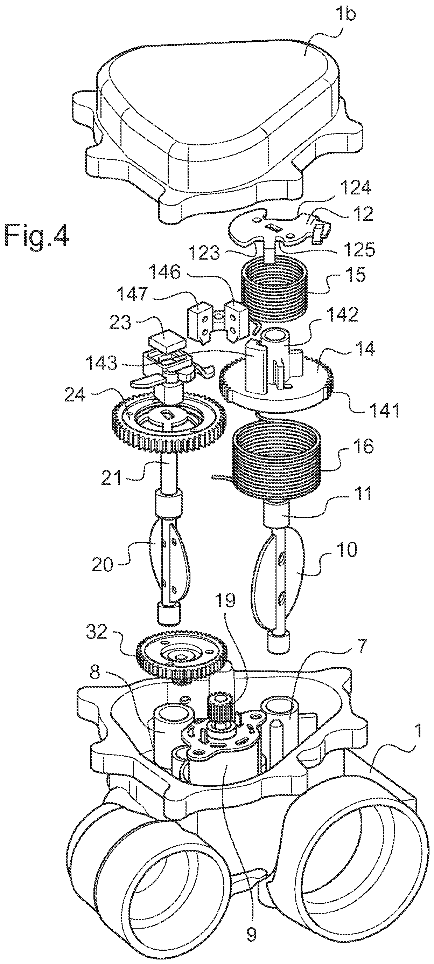

La figure 4 montre l'éclaté d'un doseur double avec les éléments qui le composent, enfermés dans le corps 1 par son couvercle 1b.

Le moteur électrique 9 actionne, par l'intermédiaire de son axe pivot 19 une roue dentée intermédiaire 32 qui coopère avec une seconde roue dentée 24 appartenant à la seconde voie 4, elle même coopérant avec une première roue dentée 14 appartenant à la première voie 3. Ces première et seconde roues dentées sont libres en rotation autour de leur axe et forment, dans la cinématique du doseur double, les organes qui actionnent, directement ou indirectement, les premier et second volets des deux voies.

Le dispositif de commande de la première voie 3, présentée ici comme la voie refroidie, comporte un premier volet 10, monté sur un axe 11, dont l'extrémité inférieure a vocation à tourner dans le support d'axe 7 du corps du doseur. Le volet est ainsi mobile en rotation par rapport au corps 1. L'extrémité supérieure, quant à elle, est porteuse d'une première platine supérieure 12 coaxiale, à laquelle elle est fixée rigidement de sorte qu'une rotation de cette platine supérieure déclenche une rotation de même ampleur du volet 10. L'axe 11 supporte par ailleurs, par un palier, la première roue dentée 14, qui est libre en rotation autour de cet axe, et qui agit sur la platine 12 pour faire tourner le premier volet 10, selon un principe qui sera explicité ci-dessous.

La roue dentée 14 a la forme d'un disque présentant des dents sur la majeure partie de la circonférence de sa face externe 141, de façon à pouvoir être entraînée en rotation par la circonférence correspondante de la seconde roue dentée 24. En son centre elle comporte un tube cylindrique 142, s'étendant axialement, qui forme un palier pour l'axe 11 du premier volet 10 de dosage du débit de première voie. Enfin à sa périphérie, la roue dentée comporte un doigt d'entraînement 143 qui s'étend axialement et qui coopère avec une première butée 123, disposée sur la périphérie de la première platine 12. Pour entraîner le premier volet 10 ainsi que pour contribuer à son retour et positionner le volet dans une position de repos où il est plein ouvert, un premier ressort 15 est positionné entre la première roue dentée 14 et la première platine 12. Les extrémités de celui-ci sont insérées dans des encoches pratiquées à la périphérie des deux pièces de façon à assurer un rappel en rotation de la première platine 12 en direction de ladite position de repos. Une butée fixe de première voie 146 est par ailleurs implantée sur le corps 1 du doseur double pour limiter la rotation de la première platine 12, par coopération de cette première butée fixe avec une excroissance 124 positionnée sur la périphérie de la platine. La première platine 12 présente en outre une plage morte 125 permettant la compression du premier ressort 15 grâce la rotation du doigt d'entraînement 143, la première platine étant immobile par suite du contact entre l'excroissance 124 de la première platine 12 et la butée fixe 146 de la première voie.

Parallèlement un second ressort de rappel 16 est positionné entre la première roue dentée 14 et une butée fixe de ressort 18 positionnée, elle aussi, sur le corps 1 du doseur double, pour forcer le retour de la première roue dentée 14 vers une position de repos dans laquelle le premier volet 10 est plein ouvert. Cette position pleine ouverte au repos permet d'assurer la sécurité du moteur du véhicule en envoyant, dans le cas d'une panne, du fluide d'admission refroidi dans les cylindres, en particulier si cette panne du moteur d'actionnement 9 intervient lors d'un cas d'utilisation sévère du moteur du véhicule.

De même le dispositif de commande de la seconde voie 4, présentée ici comme la voie non refroidie, comporte un second volet 20, mobile en rotation autour de son axe 21, dont l'extrémité inférieure a vocation à tourner dans le support d'axe 8 du corps 1 du doseur. L'extrémité supérieure, quant à elle, est porteuse de la seconde roue dentée 24, à laquelle elle est fixée rigidement de sorte qu'une rotation de cette seconde roue dentée déclenche une rotation de même ampleur du volet 20. Une rotation du moteur d'actionnement 9, d'une ampleur telle que la seconde roue dentée 24 effectue, sous l'action de la roue dentée intermédiaire 32, un demi-tour entraîne l'ouverture puis la refermeture du second volet 20, avec un retournement du volet et un changement de sa face qui est opposée au fluide d'admission en position plein fermée. Des butées fixes 147, positionnées sur le corps du doseur, peuvent être ajoutées pour limiter la rotation de la seconde roue dentée au delà des positions plein fermées et éviter que le second volet ne dépasse ces positions et n'occasionne alors des fuites sur la seconde voie alors que l'on souhaite l'obturer. Le dispositif de commande de la seconde voie est complété par un dispositif 23 de mesure de la position angulaire de la seconde roue dentée et du second volet 20. Un tel dispositif est classiquement constitué par un aimant associé à une sonde magnétique, du type sonde à effet Hall. Le résultat de sa mesure est transmis au calculateur ECU 103 qui le prend en compte dans la consigne qu'il donne au moteur d'actionnement 9.

Le dispositif de commande des volets du doseur double a été décrit en choisissant la voie refroidie comme première voie, c'est-à-dire la voie pour laquelle le volet est soumis à l'action de deux ressorts de rappel. Il est bien évident que la première voie peut être choisie comme étant la voie non refroidie, la seconde voie étant alors la voie refroidie, selon la gestion souhaitée de la température du fluide d'admission en aval de ce doseur double.

En se référant aux figures 5 et 6 on voit la loi de déplacement des volets, c'est-à-dire, l'évolution relative du positionnement des deux volets, sous l'action d'une commande du moteur d'actionnement du doseur double et de l'actionnement de la cinématique d'entraînement des deux volets 10 et 20. L'axe des abscisses correspond à la course du moteur d'actionnement 9 de sa position neutre, correspondant à la position de repos des volets, jusqu'à son plein débattement. Sur ces figures la position de repos, c'est-à-dire celle que prennent les volets 10 et 20 dans le cas d'une perte de leur entraînement par le moteur d'actionnement 9, correspond à l'axe des ordonnées. Par rapport à la position de repos, le moteur d'actionnement est susceptible d'entraîner les roues dentées dans une rotation d'ampleur 2α, en balayant la totalité des positions souhaitées pour les volets à l'aide d'une rotation dans un seul sens. Elles reviennent à la position de repos, sous l'effet des ressorts de rappel 15 et 16, à la suite d'une rotation en sens inverse du moteur d'actionnement. Dans cette position de repos le volet 10 de la première voie 3 est ouvert, alors que le volet de la seconde voie 4 est fermé.

Une rotation des roues dentées d'un angle α, représenté par la branche A sur les figures, entraîne, à la fois, une fermeture du volet 10 de la première voie et une ouverture du volet 20 de la seconde voie, pendant une première phase de la loi de déplacement. La poursuite de la rotation, d'un second angle α, représentée par la branche B, entraîne une fermeture du volet 20 de la seconde voie, celui 10 de la première voie restant fermé, pendant une seconde phase de la loi de déplacement.

La figure 6 décrit, d'une part, l'impact de ces mouvements sur la surface efficace du doseur pour le passage du fluide d'admission dans les deux voies, et donc sur le débit dosé et, d'autre part, l'influence qu'ils ont sur la température du fluide à l'entrée dans les cylindres, en aval de la confluence des deux voies. La branche A correspond ainsi à une régulation de la température du fluide, sans dosage de son volume. Les cinématiques d'ouverture et de fermeture des deux volets sont en effet représentées ici, sans que cela soit impératif, comme se compensant mutuellement, ce qui permet d'obtenir un débit constant en sortie, pour toutes les positions de la branche A. Quant à la branche B, elle correspond à un dosage du débit, sur la seule seconde voie et donc ici à un dosage du débit sur un fluide à la température non refroidie. On constate que, selon la loi de déplacement illustrée, la voie sur laquelle a lieu le dosage, c'est-à-dire la seconde voie, est également la voie fermée en position de repos.

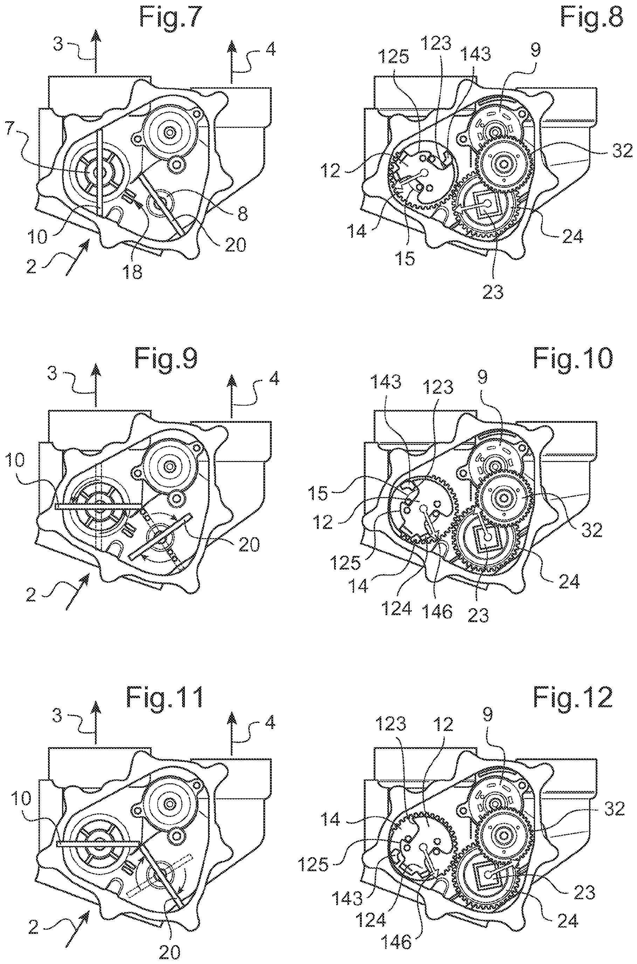

En se référant maintenant aux figures 7 à 12, on va décrire le fonctionnement de la cinématique d'un doseur double selon l'invention. Les figures 7, 9 et 11 représentent la position des volets des deux voies de sortie dans les positions extrêmes des branches A et B de la figure 5. La figure 7 correspond à la position de repos et les figures 9 et 11 correspondent à des rotations du moteur d'actionnement respectivement de +α et +2α. Sur les figures 9 et 11 la position des volets est représentée deux fois, une fois en pointillé, ce qui correspond au début de la branche correspondante A, respectivement B, et une fois en trait plein, ce qui correspond à sa position en fin de ladite branche. Les figures 8, 10 et 12 représentent la position des roues dentées des deux voies et de leurs organes d'actionnement, à l'issue des mêmes rotations.

Sur la figure 8 le moteur d'actionnement 9 est dans sa position neutre, correspondant à une absence d'action sur les roues dentées 14 et 24 qui sont dans leur position de repos, dite position 0° sur la figure. La platine 12 subit un couple dans le sens antihoraire par le premier ressort de rappel 15 qui maintient, par sa précontrainte, la butée mobile 123 de la platine 12 contre le premier doigt d'entraînement 143. Le second ressort de rappel 16 (non visible) est également dans une position de précontrainte correspondant à la position de repos des deux roues dentées 14 et 24.

Sur la figure 10 le moteur d'actionnement 9 a effectué une rotation d'un angle α (pris égale à 83° sur la figure) par rapport à la figure 8. La première roue dentée a effectué une rotation de même ampleur, de même que la platine 12 dont la butée mobile 123 a suivi le déplacement du premier doigt 143, sous l'action de la précontrainte donnée au premier ressort 15. Le premier volet 10 a, en conséquence tourné de 83°, passant de la position ouverte à la position fermée. Le second ressort 16 s'est comprimé sous la rotation de 83° de la première roue dentée auquel il est fixé par une de ses extrémités, son autre extrémité étant fixe. Cette compression garantit le retour vers la position de repos du premier volet en cas de perte ou d'absence d'une commande par le moteur d'actionnement 9. Parallèlement la seconde roue dentée 24 a tourné du même angle α, entraînant le second volet dans la même rotation, passant ainsi de la position plein fermée à la position pleine ouverte.

Sur la figure 12 le moteur d'actionnement 9 a effectué, par rapport à la figure 10, une rotation d'un second angle α, aboutissant à une rotation globale de 2α depuis sa position neutre. La première roue dentée 14 a effectué, elle aussi, une rotation de 2α tandis que la platine 12 n'a effectuée une rotation que de la valeur α. Celle-ci est en effet restée bloquée dans la position de la figure 10, par la coopération de sa seconde butée mobile 124 contre la butée fixe de première voie 146. La rotation de la première roue dentée 14 a pu se poursuivre du fait d'une échancrure 125 pratiquée sur la circonférence de la platine 12 qui permet le passage du doigt d'entraînement 143 sans interférence avec la platine. Le premier ressort 15 s'est comprimé, ce qui permettra le retour de la platine 12 et donc du premier volet 10, vers sa position de repos lorsque le moteur d'actionnement 9 sera ramené vers sa position neutre. Le second ressort 16 a poursuivi sa compression, permettant ainsi le retour des deux roues dentées 14 et 24, qui engrènent l'une sur l'autre, vers la position de repos. Au cours de cette branche B, le second volet 20, qui suit la rotation de la seconde roue dentée, est passé de la position pleine ouverte à la position plein fermée, alors que le premier volet 10 est, quant à lui, resté fermé. On obtient ainsi le dosage du débit de fluide d'admission sur la seconde voie, à une température qui reste constante.

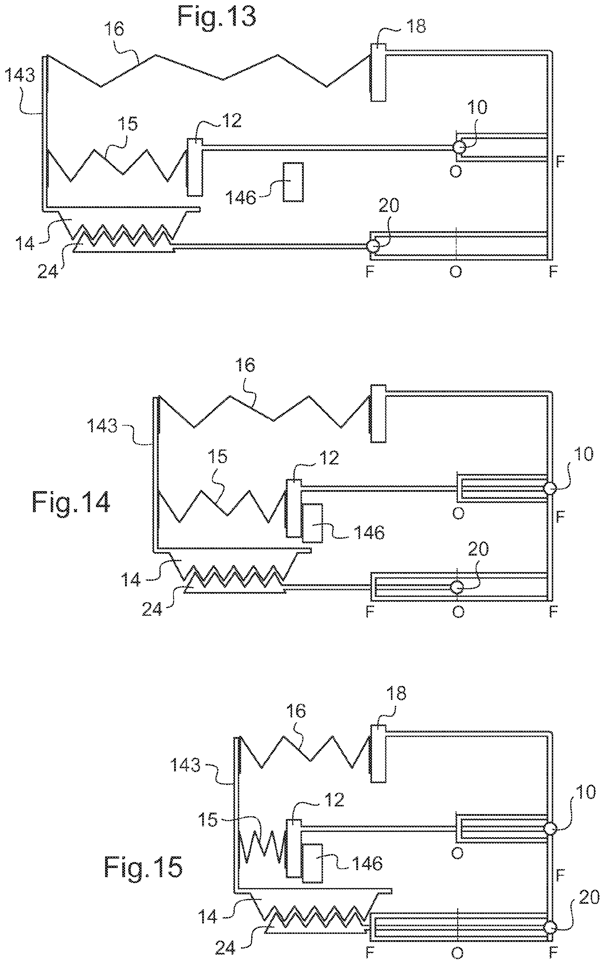

En se référant maintenant aux figures 13 à 15 on voit, sous une autre représentation, la cinématique mise en place pour réaliser les diagrammes des figures 5 et 6. Ces figures décrivent, comme précédemment, la position des éléments dans la position de repos et aux extrémités des deux branches A et B.

Le passage de la figure 13 à la figure 14, suite à une rotation du moteur d'actionnement de 0° à α, montre l'évolution de la position des divers éléments sur la branche A, qui correspond à un dosage dit proportionnel du fluide d'admission ; tous les points de la branche A correspondent en effet à un dosage dans des proportions variables du fluide passant dans les deux voies. Entre la figure 13 et la figure 14, le doigt 143 de la première roue dentée 14 tourne d'un angle α, ce qui laisse la platine 12 tourner du même angle sous l'action du premier ressort 15, et qui, par conséquent, laisse se fermer progressivement le premier volet 10. Le premier ressort 15 ne se comprime pas et reste dans une position de précontrainte. Parallèlement la seconde roue dentée 24, qui est couplée à la première roue dentée 14, tourne du même angle α et ouvre le second volet 20. Le second ressort 16 se comprime progressivement en emmagasinant de l'énergie qui sera susceptible de ramener les deux roues dentées et les deux volets vers la position de repos. A la fin de la branche A le premier volet 10 est complètement fermé et le second volet 20 complètement ouvert. Comme indiqué précédemment la cinématique des deux volets est, a priori, conçue de façon à maintenir un débit constant pour l'ensemble des deux voies 3 et 4, pour tous les points de la branche A.

Le passage de la figure 14 à la figure 15 montre le déroulement sur la branche B, où le moteur d'actionnement passe de α à 2α, c'est-à-dire qu'il correspond à une fermeture progressive du second volet 20 de la seconde voie 4, celui de la première voie restant fermé. Il correspond à un dosage du fluide d'admission sur la seule seconde voie 4, par la rotation de la seconde roue dentée, la première voie 3 restant obturée par le premier volet 10. Entre les deux figures, la première roue dentée 14 tourne elle aussi, mais la platine 12 ne tourne plus, du fait qu'elle reste bloquée contre la butée fixe de première voie 146. Le premier ressort 15 est comprimé sur cette branche du fait de la rotation de la première roue dentée alors que la platine 12 ne tourne pas. Le second ressort 16 continue sa compression, du fait qu'une de ses extrémités est associée à la rotation des deux roues dentées vis-à-vis du corps 1 et que l'autre est immobilisée par la butée fixe de ressort 18. L'énergie emmagasinée par ces deux ressorts permettra le retour des deux volets vers la position de repos lorsque le moteur d'actionnement 9 sera ramené à sa position neutre ou bien en cas de panne par perte ou absence d'une commande des volets. On remarque que la fermeture de la seconde voie 4 par le second volet s'effectue par une rotation de ce second volet d'un angle 2α, proche de 180°, par rapport à la position de repos, ce qui signifie que le second volet a effectué un retournement sur lui-même depuis sa situation plein fermé dans la position de repos, jusqu'à sa position en fin de la branche B.

Globalement, la cinématique d'un doseur double selon l'invention permet par la rotation progressive, dans un seul sens, d'un moteur d'actionnement unique, de doser simultanément le fluide d'admission sur les deux voies (branche A), en modifiant progressivement la répartition entre les deux voies, ou de le doser sur une seule voie (branche B). Quand une des voies débouche en aval du doseur sur un refroidisseur 5 alors que l'autre le contourne avant de rejoindre la première voie à la confluence des deux voies, le doseur double permet, par un positionnement des volets sur la branche A, de réguler la température du fluide d'admission. Et en calibrant la courbe d'ouverture et de fermeture des volets en fonction de l'angle de rotation du moteur d'actionnement, on arrive à conserver un débit global constant lors de ce dosage proportionnel et à n'agir, dans cette branche, que sur la température finale du fluide.

Par ailleurs, le doseur double permet, sur la branche B, de doser le fluide d'admission envoyé aux cylindres, à une température constante, qui est dite chaude ou froide selon la voie sur laquelle est installé le refroidisseur 5. Les possibilités offertes par le doseur selon l'invention sont ainsi obtenues par l'actionnement d'un moteur électrique unique, dont l'actionnement génère un couple de rotation qui n'agit que dans un seul sens pour atteindre la position désirée. La phase de retour vers sa position initiale s'effectue sans autre couple que celui qui permet de vaincre les résistances de frottement à sa rotation. Les divers éléments de la cinématique reviennent, quant à eux, en place sous l'action des ressorts de rappel 15 et 16. On peut ainsi réaliser le doseur double recherché à l'aide d'un moteur électrique simple et bon marché.

On pourra encore noter que le doseur a été présenté plus haut comme situé en amont du refroidisseur et présentant une entrée et deux sorties. En variante, il pourra bien sûr être situé en aval. Il présentera alors deux entrées et une sortie, cette dernière étant en communication avec les pipes d'admission du moteur.

## Revendications

1. Doseur double pour le dosage du fluide d'admission d'un moteur à combustion interne et la régulation de sa température, comportant un corps (1) dans lequel sont agencées une première (3) et une seconde (4) voies de circulation dudit fluide d'admission, dans lesquelles sont respectivement positionnés des premier (10) et second (20) volets d'obturation pour doser le débit traversant lesdites voies, ledit doseur comportant en outre un moteur d'actionnement (9) desdits volets et une cinématique actionnant simultanément le premier volet et le second volet selon une loi de déplacement en réponse à un actionnement dudit moteur, ladite cinématique comportant une position de repos dans laquelle se positionnent lesdits volets en absence d'effort fourni par ledit moteur d'actionnement, **caractérisé en ce que** ladite cinématique est configurée pour que lesdits volets puissent suivre l'intégralité ladite loi de déplacement sous l'action du moteur à partir de ladite position de repos et sans repasser par celle-ci.

2. Doseur double selon la revendication 1, le premier (10) et le deuxième (20) volet étant mobiles en rotation.

3. Doseur double selon la revendication 1 ou 2, dans lequel la cinématique est conformée pour assurer, en réponse à une première commande du moteur d'actionnement (9), un dosage proportionnel sur les deux voies de sortie par rotation simultanée des deux volets, une augmentation du débit sur une des voies de sortie étant associée à une diminution du débit sur l'autre, pendant une première phase de ladite loi de déplacement.

4. Doseur double selon la revendication 3 dans lequel la cinématique est conformée pour assurer un débit total constant lors dudit dosage proportionnel.

5. Doseur double selon l'une des revendications 3 ou 4 dans lequel la cinématique est conformée pour assurer, en réponse à une seconde commande du moteur d'actionnement (9) consécutive à une fermeture dudit premier volet et une ouverture dudit second volet du fait de ladite première commande, le dosage du débit traversant la seconde voie de sortie (4) par une rotation du second volet (20), le premier volet (10) restant fermé, pendant une seconde phase de ladite loi de déplacement.

6. Doseur double selon la revendication 5 dans lequel la cinématique est conformée pour amener le second volet, en réponse à la seconde commande, dans une position plein fermée correspondant à un retournement dudit volet par rapport à sa position fermée dans la position de repos.

7. Doseur double selon l'une des revendications 5 ou 6 dans lequel la cinématique est configurée pour positionner les volets en opposition à l'action de deux ressorts de rappel (15, 16), un premier ressort (15) restant précontraint pendant la première phase de la loi de déplacement pour transmettre l'effort du moteur à un premier (10) desdits volets et subissant une contrainte, sous l'action dudit moteur, pendant la seconde phase de ladite loi de déplacement, le second ressort (16) subissant une contrainte, sous l'action dudit moteur, au moins pendant la première de ladite loi de déplacement.

8. Doseur double selon la revendication 7 dans lequel le moteur d'actionnement (9) entraîne une première roue dentée (14) porteuse d'un doigt d'entraînement (143) conformé pour entraîner en rotation le premier volet (10), par l'intermédiaire dudit premier ressort de rappel (15).

9. Doseur double selon la revendication 8 dans lequel une des extrémités dudit premier ressort de rappel (15) est fixée sur une première platine (12) liée rigidement à l'axe du volet correspondant, l'autre extrémité étant fixée sur ladite première roue dentée (14).

10. Doseur double selon la revendication 9 dans lequel le moteur d'actionnement (9) entraîne par l'intermédiaire d'un pignon d'entraînement (32) deux roues dentées (14, 24) engrenant l'une sur l'autre, ladite première platine (12) comportant une plage morte (125) dans sa coopération avec le doigt d'entraînement (143) et ladite plage morte correspondant à l'actionnement du seul second volet (20) par le moteur d'actionnement (9), le premier volet (10) restant immobile.

11. Module d'admission d'air pour moteur à combustion interne comportant un doseur double selon l'une des revendications ci-dessus.

12. Module selon la revendication 11, la première voie de circulation du doseur étant reliée à un refroidisseur du module d'admission alors que la seconde voie court-circuite ce refroidisseur.

## Patentansprüche

1. Zweiwegeventil zum Dosieren des Einlassmediums eines Verbrennungsmotors und zum Regeln seiner Temperatur, umfassend ein Gehäuse (1), in dem ein erster Zirkulationskanal (3) und ein zweiter Zirkulationskanal (4) für das Einlassmedium angeordnet sind, in denen erste Verschlussklappen (10) und zweite Verschlussklappen (20) zum Dosieren des die Kanäle durchströmenden Volumenstroms positioniert sind, wobei das Ventil darüber hinaus einen Motor (9) zum Betätigen der Klappen und eine Kinematik, welche die erste Klappe und die zweite Klappe als Reaktion auf eine Betätigung des Motors nach einem Bewegungsgesetz gleichzeitig betätigt, umfasst, wobei die Kinematik eine Ruhestellung umfasst, in die sich die Klappen bei Nichtvorliegen einer vom Betätigungsmotor abgegebenen Kraft positionieren, **dadurch gekennzeichnet, dass** die Kinematik so gestaltet ist, dass die Klappen dem Bewegungsgesetz unter der Einwirkung des Motors von der Ruhestellung aus und ohne diese erneut zu durchlaufen in Gänze folgen können.

2. Zweiwegeventil nach Anspruch 1, wobei die erste Klappe (10) und die zweite Klappe (20) drehbeweglich sind.

3. Zweiwegeventil nach Anspruch 1 oder 2, wobei die Kinematik so ausgebildet ist, dass sie als Reaktion auf einen ersten Befehl des Betätigungsmotors (9) für eine proportionale Dosierung über die beiden Auslasskanäle durch gleichzeitiges Drehen der beiden Klappen, wobei eine Erhöhung des Volumenstroms über einen der Auslasskanäle an eine Verringerung des Volumenstroms über den anderen gekoppelt ist, während einer ersten Phase des Bewegungsgesetzes sorgt.

4. Zweiwegeventil nach Anspruch 3, wobei die Kinematik so ausgebildet ist, dass sie bei der proportionalen Dosierung für einen konstanten Gesamtvolumenstrom sorgt.

5. Zweiwegeventil nach einem der Ansprüche 3 oder 4, wobei die Kinematik so ausgebildet ist, dass sie als Reaktion auf einen zweiten Befehl des Betätigungsmotors (9) nach einem Schließen der ersten Klappe und einem Öffnen der zweiten Klappe aufgrund des ersten Befehls, für die Dosierung des den zweiten Auslasskanal (4) durchströmenden Volumenstroms durch Drehen der zweiten Klappe (20), während die erste Klappe (10) geschlossen bleibt, während einer zweiten Phase des Bewegungsgesetzes sorgt.

6. Zweiwegeventil nach Anspruch 5, wobei die Kinematik so ausgebildet ist, dass sie die zweite Klappe als Reaktion auf den zweiten Befehl in eine ganz geschlossene Stellung bringt, die einer Umkehr der Klappe in Bezug auf ihre geschlossene Stellung in der Ruhestellung entspricht.

7. Zweiwegeventil nach einem der Ansprüche 5 oder 6, wobei die Kinematik so gestaltet ist, dass sie die Klappen gegen die Wirkung von zwei Rückstellfedern (15, 16) positioniert, wobei eine erste Feder (15) während der ersten Phase des Bewegungsgesetzes vorgespannt bleibt, um die Kraft des Motors auf eine erste (10) der Klappen zu übertragen, und unter der Wirkung des Motors während der zweiten Phase des Bewegungsgesetzes eine Beanspruchung erfährt, wobei die zweite Feder (16) unter der Wirkung des Motors mindestens während der ersten des Bewegungsgesetzes eine Beanspruchung erfährt.

8. Zweiwegeventil nach Anspruch 7, wobei der Betätigungsmotor (9) ein erstes Zahnrad (14) antreibt, das einen Mitnehmer (143) trägt, der so ausgebildet ist, dass er die erste Klappe (10) über die erste Rückstellfeder (15) drehantreibt.

9. Zweiwegeventil nach Anspruch 8, wobei eines der Enden der ersten Rückstellfeder (15) an einer ersten Platte (12) befestigt ist, die starr mit der Achse der entsprechenden Klappe verbunden ist, wobei das andere Ende an dem ersten Zahnrad (14) befestigt ist.

10. Zweiwegeventil nach Anspruch 9, wobei der Betätigungsmotor (9) über ein Antriebsritzel (32) zwei Zahnräder (14, 24) antreibt, die ineinander verzahnt sind, wobei die erste Platte (12) in ihrem Zusammenwirken mit dem Mitnehmer (143) einen toten Bereich (125) umfasst und der tote Bereich der Betätigung nur der zweiten Klappe (20) durch den Betätigungsmotor (9) entspricht, während die erste Klappe (10) unbeweglich bleibt.

11. Luftansaugmodul für einen Verbrennungsmotor, umfassend ein Zweiwegeventil nach einem der vorhergehenden Ansprüche.

12. Modul nach Anspruch 11, wobei der erste Zirkulationskanal des Ventils mit einem Kühler des Ansaugmoduls verbunden ist, während der zweite Kanal diesen Kühler kurzschließt.

## Claims

1. Double distributor for distributing the intake fluid of an internal combustion engine and controlling the temperature thereof, comprising a body (1) in which a first (3) and a second (4) channel for circulating said intake fluid are arranged, first (10) and second (20) shutters being respectively positioned in said channels in order to distribute the flow passing through said channels, said distributor additionally comprising a motor (9) for actuating said shutters and kinematics simultaneously actuating the first shutter and the second shutter according to a movement law in response to an actuation of said motor, said kinematics comprising an inactive position in which said shutters are positioned when no force is provided by said actuating motor, **characterized in that** said kinematics are configured such that said shutters can follow the whole of said movement law under the action of the motor from said inactive position without returning to said position.

2. Double distributor according to Claim 1, the first (10) and the second (20) shutter being rotatable.

3. Double distributor according to Claim 1 or 2, in which the kinematics are configured to ensure, in response to a first control of the actuating motor (9), a proportional distribution on the two outlet channels by simultaneous rotation of the two shutters, an increase in the flow on one of the outlet channels being associated with a decrease in the flow on the other, during a first phase of said movement law.

4. Double distributor according to Claim 3, in which the kinematics are configured to ensure a constant total flow during said proportional distribution.

5. Double distributor according to either of Claims 3 and 4, in which the kinematics are configured to ensure, in response to a second control of the actuating motor (9) consecutive to a closure of said first shutter and an opening of said second shutter resulting from said first control, the distribution of the flow passing through the second outlet channel (4) by a rotation of the second shutter (20), the first shutter (10) remaining closed, during a second phase of said movement law.

6. Double distributor according to Claim 5, in which the kinematics are configured to bring the second shutter, in response to the second control, into a fully closed position corresponding to said shutter being turned 180° compared to its closed position when in the inactive position.

7. Double distributor according to either of Claims 5 and 6, in which the kinematics are configured to position the shutters in opposition to the action of two return springs (15, 16), a first spring (15) remaining prestressed during the first phase of the movement law in order to transmit the force of the motor to a first (10) of said shutters and being subjected to a stress, under the action of said motor, during the second phase of said movement law, the second spring (16) being subjected to a stress, under the action of said motor, at least during the first of said movement law.

8. Double distributor according to Claim 7, in which the actuating motor (9) drives a first toothed wheel (14) bearing a drive finger (143) configured to rotate the first shutter (10), via said first return spring (15).

9. Double distributor according to Claim 8, in which one of the ends of said first return spring (15) is fixed to a first plate (12) rigidly connected to the shaft of the corresponding shutter, the other end being fixed to said first toothed wheel (14).

10. Double distributor according to Claim 9, in which the actuating motor (9) drives, via a drive pinion (32), two toothed wheels (14, 24) meshing with one another, said first plate (12) comprising a dead range (125) in its cooperation with the drive finger (143) and said dead range corresponding to the actuation of only the second shutter (20) by the actuating motor (9), the first shutter (10) remaining immobile.

11. Air intake module for an internal combustion engine comprising a double distributor according to one of the preceding claims.

12. Module according to Claim 11, the first circulation channel of the distributor being connected to a cooler of the intake module while the second channel short-circuits this cooler.
